# EUROPÄISCHE PATENTSCHRIFT

(11) **EP 2 954 542 B1**
(45) Veröffentlichungstag und Bekanntmachung des Hinweises auf die Patenterteilung: **02.10.2019**
(21) Anmeldenummer: 14700432.9
(22) Anmeldetag: 14.01.2014
(51) Int. Cl.: H01F 7/16, H01F 7/08

(54) **BISTABILER ELEKTROMAGNETISCHER AKTUATOR UND CHIRURGISCHES INSTRUMENT**
BI-STABLE ELECTROMAGNETIC ACTUATOR, AND SURGICAL INSTRUMENT
ACTIONNEUR ÉLECTROMAGNÉTIQUE BISTABLE ET INSTRUMENT CHIRURGICAL

(30) Priorität: 07.02.2013 DE 102013202019
(43) Veröffentlichungstag der Anmeldung: 16.12.2015
(73) Patentinhaber: Olympus Winter & Ibe GmbH, 22045 Hamburg (DE)
(72) Erfinder: WIETERS, Martin, 22885 Barsbüttel (DE)
(74) Vertreter: Seemann & Partner Patentanwälte mbB
(86) Internationale Anmeldenummer: PCT/EP2014/000061
(87) Internationale Veröffentlichungsnummer: WO 2014/121881

(56) Entgegenhaltungen:
- DE-A1-102011 006 814
- FR-A1- 2 929 753
- US-A- 3 103 603
- US-A- 4 315 197

## Beschreibung

Die Erfindung betrifft einen bistabilen elektromagnetischen Aktuator, insbesondere für ein chirurgisches Instrument, umfassend einen außerhalb eines Rohres angeordneten Stator und einen im Rohr längsaxial verschiebbar gelagerten Läufer, der wenigstens teilweise ein paramagnetisches und/oder ferromagnetisches Material aufweist und durch Beaufschlagung mit einem elektromagnetischen Feld reversibel zwischen einer ersten Position und einer zweiten Position verschiebbar ist, wobei der Läufer in der ersten und/oder zweiten Position an einem Anschlag anliegt, wobei der Stator zwei gegensinnig axial gepolte Ringpermanentmagneten, eine Spule zur Erzeugung des elektromagnetischen Felds und ein Rückschlusselement mit zwei Statorpolschuhen aufweist und der Läufer weder in der ersten Position noch in der zweiten Position in axialer Richtung über die Ringpermanentmagneten hinausragt, sowie ein chirurgisches Instrument.

Bistabile elektromagnetische Aktuatoren weisen einen Läufer auf, der in einem Permanentmagnetfeld in einer von zwei extremen Positionen gehalten werden und durch Schaltung eines elektromagnetischen Feldes aus einer stabilen Position in die andere stabile Position überführt werden können. Damit können beispielsweise Schalter betätigt werden. In dem Fall von chirurgischen Instrumenten, insbesondere Endoskopen, können diese kleinbauenden Aktuatoren dazu verwendet werden, beispielsweise einen Fokus oder eine Vergrößerung eines optischen Systems zu verändern oder eine Blickrichtung zu verändern. Dies geschieht, indem ein optisches Bauteil durch den Aktuator verschoben wird, wobei sich das optische Bauteil im oder am Läufer des Aktuators befindet.

Aus DE 10 2008 042 701 A1 ist ein Linearmotor für optische Systeme, beispielsweise Endoskope, bekannt. Der Motor hat einen Stator mit zwei Permanentmagneten, die gleichsinnig gepolt mit einem Rückschlusselement magnetisch miteinander verbunden sind. Eine Spule ist zwischen den Magneten angeordnet. Seitlich neben jedem Magnet ist noch ein Polschuh mit dem Rückschlusselement magnetisch verbunden. Der Läufer des Motors umfasst ein Joch aus weichmagnetischem Material, welches im magnetischen Eingriff mit dem Permanentmagneten des Stators steht. Durch Beaufschlagung der Spule mit Strom kann der Läufer aus einer Ruhelage heraus in Längsrichtung verschoben werden.

Der Läufer gemäß DE 10 2008 042 701 A1 besteht aus einem rohrförmigen weichmagnetischen Element, so dass aufgrund der resultierenden Reibung des rohrförmigen Läufers an dem Rohr eine hohe Kraft aufgewendet werden muss, um den Läufer aus einer Position in die andere Position zu verschieben. Weiterhin ist der Linearmotor gemäß DE 10 2008 042 701 A1 vergleichsweise großbauend.

Ein gattungsgemäßer elektromagnetischer Aktuator für ein chirurgisches oder medizinisches Instrument mit einem Stator und einem verschiebbaren Element, das von einer ersten Position in eine zweite Position verschiebbar ist und in der ersten Position durch ein Permanentmagnetfeld gehalten wird oder ist und in der zweiten Position ebenfalls durch ein Permanentmagnetfeld gehalten wird oder ist, ist in DE 10 2011 006 814 A1 offenbart.

Ähnliche magnetische Konstellationen finden sich auch bei Linearmotoren, die keine definierten Positionen bzw. Schaltstellungen haben. Solche Linearmotoren sind beispielsweise in FR 2 929 753 A1, US 3 103 603 A oder US 4 315 197 A beschrieben. In US 3 103 603 A ist ein oszillierender synchroner elektromagnetischer Motor mit einem axial beweglichen Läufer innerhalb eines magnetischen Feldes offenbart, der mit Wechselstrom betrieben wird und elastischen Rückstellkräften ausgesetzt ist, die von Rückstellfedern bereitgestellt werden. Der lineare magnetische Generator aus US 4 315 197 A benutzt magnetischen Fluss dazu, mechanische Bewegung oder elektrische Energie zu erzeugen. Der lineare Hub der Läufer in diesen Linearmotoren ist nicht durch Anschläge begrenzt.

Demgegenüber liegt der vorliegenden Erfindung die Aufgabe zugrunde, einen kleinbauenden bistabilen elektromagnetischen Aktuator und ein chirurgisches Instrument mit einem entsprechenden bistabilen elektromagnetischen Aktuator zur Verfügung zu stellen, wobei bei kleiner Bauform größere Verschiebekräfte auf den Läufer ausgeübt werden.

Diese Aufgabe wird durch einen bistabilen elektromagnetischen Aktuator, insbesondere für ein chirurgisches Instrument, umfassend einen außerhalb eines Rohres angeordneten Stator und einen im Rohr längsaxial verschiebbar gelagerten Läufer, der wenigstens teilweise ein paramagnetisches und/oder ferromagnetisches Material aufweist und durch Beaufschlagung mit einem elektromagnetischen Feld reversibel zwischen einer ersten Position und einer zweiten Position verschiebbar ist, wobei der Läufer in der ersten und/oder zweiten Position an einem Anschlag anliegt, wobei der Stator zwei gegensinnig axial gepolte Ringpermanentmagneten, eine Spule zur Erzeugung des elektromagnetischen Felds und ein Rückschlusselement mit zwei Statorpolschuhen aufweist und der Läufer weder in der ersten Position noch in der zweiten Position in axialer Richtung über die Ringpermanentmagneten hinausragt, wobei das Rückschlusselement mit den Statorpolschuhen die Spule umschließt und die Statorpolschuhe auf beiden Seiten der Spule zwischen der Spule und den Ringpermanentmagneten angeordnet sind, wobei der Läufer zwei Läuferpolschuhe aufweist, gelöst, indem eine axiale Breite der Statorpolschuhe kleiner ist als eine axiale Breite der Läuferpolschuhe.

Bei dem erfindungsgemäßen Aktuator wird die mit der Erfindung zugrundeliegende Aufgabe dadurch gelöst, dass der Spulenstrom und die Verlustleistung in der Spule gering gehalten werden können, indem der Wirkungsgrad der Spule erhöht wird. Dies wird durch die Geometrie der Aktuatorenelemente erzielt. Die erfindungsgemäße Geometrie beruht darauf, dass das Rückschlusselement mit dem Statorpolschuh nicht mehr, wie in DE 10 2008 042 701 A1 gezeigt, sowohl die Spule als auch die Ringmagnete umschließt, sondern nur noch die Spule, während die Ringmagnete außerhalb der Statorpolschuhe angeordnet sind. Dazu werden axial magnetisierte Magnetringe verwendet, da über diese kein radial angeordnetes Weicheisen des Rückschlusselements notwendig ist.

Aus diesem Grund kann der Stator in einem kleineren radialen Bauraum realisiert werden. Da die Statorpolschuhe zwischen den Permanentmagneten und der Spule angeordnet sind, ergibt sich ein höherer Spulenwirkungsgrad, da die Polschuhe direkt mit dem Rückschluss verbunden sind. Dadurch kann die axiale Länge des Stators und damit auch die axiale Länge des Läufers verkleinert werden.

Da der Läufer selbst Läuferpolschuhe aufweist, weist er eine zentrale radiale Verjüngung auf, so dass an dessen Enden jeweils ein Polschuh ausgebildet ist. Damit berührt der Läufer das Rohr nur noch an den Stellen der Polschuhe und nicht mehr ganzflächig. Dadurch wird die Reibung zwischen Läufer und dem Rohr, in dem der Läufer angeordnet ist, vermindert. Dies erhöht die Effizienz des Schaltens, da weniger Reibungswiderstand überwunden werden muss. Außerdem wird hierdurch der negative Einfluss von beispielsweise Gradheitsfehlern oder Verbiegungen durch die auf zwei kleine Auflageflächen bzw. Auflagelinien verringerte Passung reduziert.

Dies führt insgesamt zu einem guten Wirkungsgrad der Spule bzw. des Aktuators und zu einer guten Balance aus Haltekraft und Schaltkraft.

Wenn die axiale Breite der Statorpolschuhe kleiner ist als ein axialer Hub des Aktuators zwischen der ersten Position und der zweiten Position, lassen sich große Unterschiede zwischen der Haltekraft und der Schaltkraft realisieren.

Vorteilhafterweise weist der Läufer mit den Läuferpolschuhen eine Gesamtlänge in axialer Richtung auf, die größer ist als der äußere Abstand der Statorpolschuhe in axialer Richtung. Ebenfalls vorzugsweise ist ein Abstand der axialen Mittenebenen der Läuferpolschuhe größer als ein Abstand der axialen Mittenebenen der Statorpolschuhe. Durch diese vorteilhaften Merkmale lässt sich die Balance zwischen Haltekraft und Schaltkraft gut einstellen und die Schaltkraft erhöhen.

Wenn vorzugsweise die Statorpolschuhe untereinander eine gleiche axiale Breite aufweisen und/oder die Läuferpolschuhe untereinander eine gleiche axiale Breite aufweisen und/oder der Stator und/oder der Läufer jeweils symmetrisch um eine Symmetrieebene ausgebildet ist oder sind, ist ein symmetrischer Aufbau des erfindungsgemäßen Aktuators in axialer Richtung realisiert, so dass in den beiden Endpositionen bzw. in der ersten Position und der zweiten Position die gleichen Haltekräfte herrschen und die gleichen Schaltkräfte aufgewendet werden, um die Position des Läufers im Aktuator zu ändern. Es können auch nur einzelne der genannten geometrischen Maße jeweils symmetrisch ausgeführt sein. Wenn der Aktuator im Betrieb beispielsweise von einer Seite dauerbelastet ist, kann es vorteilhaft sein, die vollständige Symmetrie des Aktuators in axialer Richtung zu durchbrechen und in einer Position eine höhere Haltekraft und/oder Schaltkraft zu realisieren, als in einer anderen Position.

Erfindungsgemäß liegt der Läufer in der ersten und/oder zweiten Position an einem Anschlag an. Der Anschlag ist vorzugsweise jeweils so angeordnet, dass die von den Permanentmagneten erzeugte Kraft auf den Läufer in dieser Position den Läufer weiter in Richtung auf den Anschlag drückt oder zieht, an dem der Läufer anliegt.

In einer vorteilhaften Weiterbildung überdeckt in einer Endposition, insbesondere der ersten oder zweiten Position, der an der Endposition angeordnete Läuferpolschuh den ihm gegenüberliegenden Statorpolschuh in axialer Richtung wenigstens teilweise, wobei eine Mittenebene des an der Endposition angeordneten Läuferpolschuhs in axialer Richtung zur Endposition hin über eine Mittenebene des ihm gegenüberliegenden Statorpolschuhs hinaus angeordnet ist. Dies betrifft denjenigen Läuferpolschuh bzw. Statorpolschuh, der in axialer Richtung näher an der momentanen Endposition angeordnet ist. Im Falle eines Endoskops mögen dies in der distalen Endposition die distalen Polschuhe von Stator und Läufer sein. Diese liegen sich gegenüber. In der proximalen Endposition sind dies die proximalen Polschuhe von Stator und Läufer. Auch diese liegen sich gegenüber.

Ebenfalls vorzugsweise überdeckt in einer Endposition der nicht an der Endposition angeordnete Läuferpolschuh den ihm gegenüberliegenden Statorpolschuh in axialer Richtung vollständig, wobei eine Mittenebene des nicht an der Endposition angeordneten Läuferpolschuhs in axialer Richtung zur Endposition hin über eine Mittenebene des ihm gegenüberliegenden Statorpolschuhs hinaus angeordnet ist. Am Beispiel des Endoskops sind dies beispielsweise in der distalen Endposition des Läufers die proximalen Polschuhe von Läufer und Stator, und umgekehrt.

Diese beiden Situationen einzeln oder zusammen genommen bedeuten, dass eine sehr stabile und hohe Haltekraft bei geringem Aufwand an Bestromung der Spule in der jeweiligen Endposition realisiert wird, aufgrund der hierfür günstigen magnetischen Kraftflussführung. Außerdem wird hierdurch die Schaltkraft, die auf den Läufer wirkt, stark erhöht.

Schließlich wird die Erfindung durch ein chirurgisches Instrument, insbesondere Endoskop, mit einem erfindungsgemäßen, zuvor beschriebenen bistabilen elektromagnetischen Aktuator gelöst. Da der Aktuator sehr klein gebaut werden kann, kann dieser auch in ein Endoskop mit einem engen Endoskopschaft implementiert werden.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Querschnittsdarstellung durch einen erfindungsgemäßen Aktuator,
- Fig. 2: eine Ausschnittsdarstellung aus dem distalen Teil des Aktuators gemäß Fig. 1,
- Fig. 3: eine schematische Darstellung des proximalen Teils des Aktuators gemäß Fig. 1 und Fig. 4, die Läufer-Position abhängigen Haltekräfte und Schaltkräfte bei einem erfindungsgemäßen Aktuator im Vergleich zu einem herkömmlichen Aktuator, und
- Fig. 4: ein Kraft-Weg-Diagramm für Halte- und Schaltkräfte bei einem erfindungsgemäßen Aktuator im Vergleich zu einem bekannten Aktuator.

In den Zeichnungen sind jeweils gleiche oder gleichartige Elemente und/oder Teile mit denselben Bezugsziffern versehen, so dass von einer erneuten Vorstellung jeweils abgesehen wird.

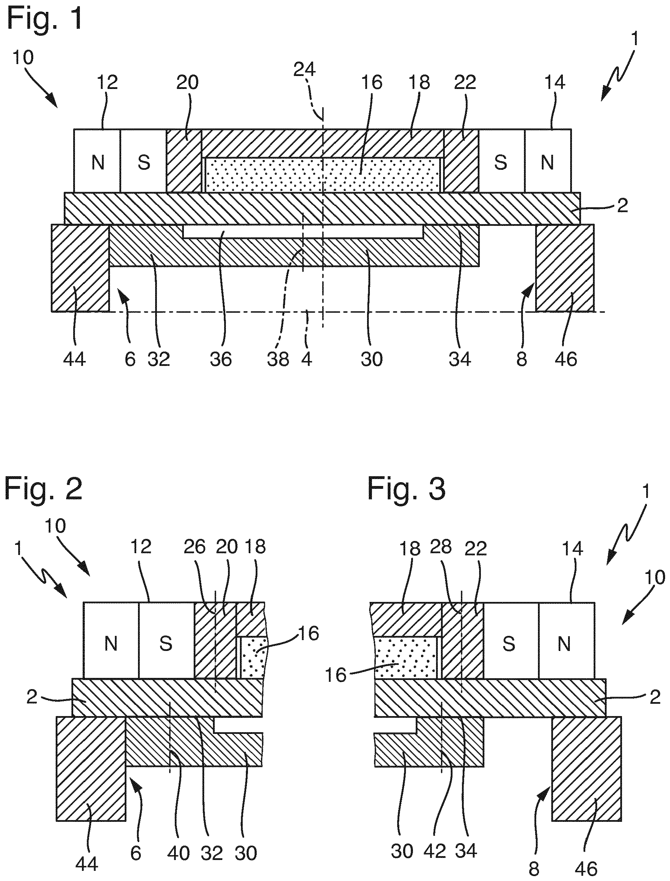

In Fig. 1 ist ein erfindungsgemäßer bistabiler elektromagnetischer Aktuator 1 im Querschnitt dargestellt. Der Aktuator 1 ist im Wesentlichen um die zentrale Achse 4 rotationssymmetrisch und es ist nur eine Hälfte des Aktuators 1 dargestellt. Durch Spiegelung an der zentralen Achse 4 ergibt sich der vollständige Schnitt durch den Aktuator 1.

Im Folgenden wird der Aktuator 1 so beschrieben, als wäre er in einem chirurgischen Instrument, nämlich in einem Endoskop mit einem distalen Ende und einem proximalen Ende. Die Richtung nach distal ist in den Fig. 1 bis 3 nach links, die Richtung nach proximal nach rechts, dargestellt.

Radial außerhalb eines Rohres 2 ist ein Stator 10 angeordnet, der zwei Ringmagneten 12, 14 aufweist, die axial gegensinnig magnetisiert sind, so dass in Fig. 1 die Südpole der Magneten einander gegenüberliegen. Dabei ist bei einer Integration in ein Endoskop der Ringmagnet 12 ein distaler Ringmagnet und der Ringmagnet 14 ein proximaler Ringmagnet.

Zwischen den Ringmagneten 12 und 14 ist eine zylindrische Spule 16 symmetrisch angeordnet, wobei radial außerhalb der Spule 16 ein ebenfalls zylindrisches Rückschlusselement 18 aus einem weichmagnetischen Material angeordnet ist, das radial außen mit den Ringmagneten 12, 14 bündig schließt. Das Rückschlusselement 18 mündet distal in einen distalen Statorpolschuh 20 und proximal in einen proximalen Statorpolschuh 22. Rückschlusselement 18 und Statorpolschuhe 20, 22 können einstückig oder aus verschiedenen Teilen, die alle weichmagnetisch sind, ausgebildet sein. Die distalen und proximalen Polschuhe 20, 22 sind zwischen der Spule 16 und den distalen und proximalen Ringmagneten 12, 14 angeordnet. Insgesamt ergibt sich eine bündige radiale äußere Abschlussfläche. Der Stator 10 gemäß Fig. 1 ist um eine Symmetrieebene 24 in axialer Richtung symmetrisch.

Der Aktuator 1 gemäß Fig. 1 weist radial innerhalb des Rohrs 2 einen Läufer 30 auf, der, insbesondere zur Gänze, aus einem weichmagnetischen Material besteht. Dieser Läufer 30 ist in der Mitte verjüngt und mündet in einen distalen Läuferpolschuh 32 und in einen proximalen Läuferpolschuh 34, wobei der distale Läuferpolschuh 32 im Wesentlichen dem distalen Statorpolschuh 20 gegenüberliegt und der proximale Läuferpolschuh 34 im Wesentlichen dem proximalen Statorpolschuh 22 gegenüberliegt. Der Läufer 30 ist in der Mitte verjüngt, so dass er einen Spalt 36 zum Rohr 2 offenlässt. Da der Läufer 30 das Rohr 2 lediglich mit den Innenflächen der Polschuhe 32, 34 berührt, ist einerseits die Reibung vermindert und andererseits eine verkippungssichere Anordnung des Läufers 30 im Rohr 2 gewährleistet. Der Läufer 30 ist in axialer Richtung um eine Symmetrieebene 38 symmetrisch.

Distal und proximal des Läufers 30 ist dessen Bewegung durch einen distalen Anschlag 44 und einen proximalen Anschlag 46 begrenzt. Im Gegensatz zum Läufer 30, der axial beweglich im Rohr 2 angeordnet ist, sind die Anschläge 44, 46 in axialer Richtung fixiert.

In Fig. 1 ist eine Situation dargestellt, in der der Läufer 30 in einer ersten Position 6 durch die Permanentmagneten 12, 14 gehalten wird, in der der Läufer 30 am distalen Anschlag 45 anliegt. Die zweite Position 8 wäre diejenige, in der der Läufer 30 am proximalen Anschlag 46 anliegt.

In den Fig. 2 und 3 sind weitere Details der Geometrie des Aktuators 1 aus Fig. 1 dargestellt. In Fig. 2 ist gezeigt, dass die axiale Breite des distalen Läuferpolschuhs 32 größer ist als die axiale Breite des distalen Statorpolschuhs 20. Ebenfalls ist gezeigt, dass in der ersten Position 6, in der der Läufer 30 am distalen Anschlag 45 anliegt, noch eine Teilüberlappung zwischen dem distalen Läuferpolschuh 32 und dem distalen Statorpolschuh 20 vorliegt. Zu einem großen Teil überlappt der distale Läuferpolschuh 32 in dieser Position 6 den distalen Ringmagneten 12.

In Fig. 2 sind außerdem die axialen Mittenebenen 26 des distalen Statorpolschuhs 20 und 40 des distalen Läuferpolschuhs 32 gezeigt. In der gezeigten ersten Position 6 ist die axiale Mittenebene 40 des distalen Läuferpolschuhs 32 distal der axialen Mittenebene 26 des distalen Statorpolschuhs 20 eingeordnet. Da somit der Läufer 30 mit seinem distalen Läuferpolschuh 32 näher am distalen Ringmagneten 12 angeordnet ist, übt der distale Ringmagnet 12 eine größere Anziehungskraft auf den Läuferpolschuh 32 aus, als der proximale Ringmagnet 14 dies auf den proximalen Läuferpolschuh 34 des Läufers 30 tut. Damit wird der Läufer 30 in der ersten Position 6 gehalten.

In Fig. 3 ist ebenfalls für den Fall, dass der Läufer 30 in der ersten Position 6 am distalen Anschlag 44 einliegt, ein Ausschnitt im proximalen Bereich des Aktuators 1 gezeigt. Hierbei überlappt der proximale Läuferpolschuh 34 den proximalen Statorpolschuh 22 in dessen gesamter Breite. Gleichzeitig ist die Mittenebene 42 des proximalen Läuferpolschuhs 34 distal der Mittenebene 28 des proximalen Statorpolschuhs 22 angeordnet. Es ist keine oder nur eine geringe Überlappung zwischen dem Läufer 30 und dem proximalen Ringmagneten 14 vorhanden.

Ist nun ein Positionswechsel aus der ersten Position 6 in die zweite Position 8 durch den Läufer 30 gewünscht, so wird die Spule 16 bestromt und das durch die Spule 16 elektromagnetisch erzeugte Magnetfeld dringt durch das Rückschlusselement 18 und die Statorpolschuhe 20, 22 sowie durch das Rohr 2 in die Polschuhe 32, 34 des Läufers 30, zusätzlich zu den permanenten Magnetfeldern der Ringpermanentmagneten 12, 14. Dieses durch die Spule 16 erzeugte Magnetfeld ist in diesem Fall so orientiert, dass es das Magnetfeld, das durch den Ringmagneten 14 erzeugt wird, unterstützt und dem durch den Ringmagneten 12 erzeugten Magnetfeld entgegenwirkt. Da in der in den Fig. 1 bis 3 gezeigten Geometrie der proximale Läuferpolschuh 34 der proximalen Statorpolschuh 22 vollständig überdeckt, ist hier ein sehr effizienter Magnetfluss realisiert und es wird eine große Schaltkraft auf den Läufer 30 ausgeübt. Gleichzeitig wird die Haltekraft, die durch den distalen Ringmagneten 12 ausgeübt wird, vermindert. Nach dem Schalten, also nach dem Erreichen der zweiten Position 8 durch den Läufer 30, wird die Bestromung der Spule 16 unterbrochen und es übernimmt die Haltekraft des Permanentmagnetfeldes des Ringmagneten 14.

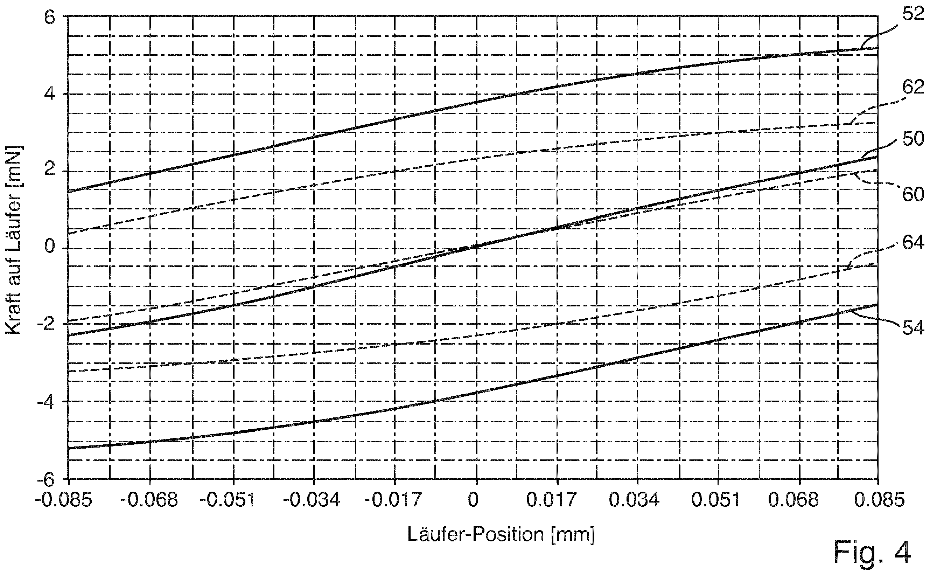

In Fig. 4 ist in einem Kraft-Weg-Diagramm die Abhängigkeit von Haltekräften bzw. Schaltkräften von der Läuferposition im Aktuator für einen erfindungsgemäßen Aktuator 1 gemäß den Fig. 1 bis 3 einerseits und für einen herkömmlichen Aktuator andererseits dargestellt, der vergleichbare Dimensionen aufweist. Es ist erkennbar, dass die Haltekraft 50 der erfindungsgemäßen Anordnung die Haltekraft 60 der bekannten Anordnung um etwa 15% übersteigt, was daraus deutlich wird, dass die Steigung der Kurve 50 um etwa 15% größer ist als die Steigung der Kurve 60.

Die durchgezogenen und gestrichelten Kurven 52, 54, 62 und 64 zeigen jeweils die positiven bzw. negativen Schaltkräfte, d.h. die auf den Läufer in Abhängigkeit von seiner Position einwirkenden Kräfte unter positiver oder negativer Bestromung der jeweiligen Spule. Diese Kurven sind sämtlich symmetrisch gegenüber einer Rotation um 180° um den Ursprung des Koordinatensystems, da die zugrundeliegenden Aktuatoren symmetrisch aufgebaut sind.

Die Kurven 52 und 62 einerseits und die Kurven 54 und 64 andererseits bezeichnen die Schaltkräfte auf den Läufern bei einem positiven Schaltsignal bzw. bei einem negativen Schaltsignal. Bei dem erfindungsgemäßen Aktuator zeigt sich eine deutliche Vergrößerung der Schaltkräfte. Am Beispiel der Kurven 52 und 62 wird deutlich, dass an der Läufer-Position -0,085 mm der Sprung von Haltekraft auf Schaltkraft beim erfindungsgemäßen Aktuator gegenüber dem herkömmlichen Aktuator, also die Differenz zwischen Kurven 62 und 60 einerseits in Bezug auf die Differenz zwischen den Kurven 52 und 50 andererseits um fast 70% gesteigert wurde, während an der Position +0,085 mm, wo die absoluten Differenzen zwischen Schaltkraft und Haltekraft kleiner sind, der Sprung relativ eine Steigerung von ca. 270% bedeutet.

Wenn sich der Läufer in der Position -0,085 mm befindet, so wird er mit einer Haltekraft von etwa -2 mN in dieser Position gehalten. In absoluten Werten ist ebenfalls aus dem Diagramm zu entnehmen, dass bei dem herkömmlichen Aktuator bei dem Anlegen eines positiven Schaltsignals die auf dem Läufer wirkende Kraft lediglich etwa 0,4 mN beträgt, während bei dem erfindungsgemäßen Aktuator diese Kraft bereits fast 1,5 mN beträgt. Damit ist die Kraft auf dem Läufer bereits zu Beginn des Schaltvorgangs um einen Faktor von fast 4 größer als beim herkömmlichen Aktuator, so dass der Schaltvorgang schneller beginnt und der Läufer 30 schneller aus seiner bisherigen Position entfernt wird. Da über den gesamten Schaltverlauf die auf den Läufer wirkende Kraft beim erfindungsgemäßen Aktuator größer ist als beim herkömmlichen Aktuator, erfolgt auch der gesamte Schaltvorgang schneller.

Damit ist bei gleichartiger Baugröße eine schnellere Schaltung realisiert, indem die Geometrie zu einer effizienteren Nutzung der Permanentmagneten 12, 14 und der Spule 16 führt.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen sind durch die Ansprüche definiert.

### Bezugszeichenliste

- 1: Aktuator
- 2: Rohr
- 4: zentrale Achse
- 6: erste Position
- 8: zweite Position
- 10: Stator
- 12: distaler Ringmagnet
- 14: proximaler Ringmagnet
- 16: Spule
- 18: Rückschlusselement
- 20: distaler Statorpolschuh
- 22: proximaler Statorpolschuh
- 24: Symmetrieebene des Stators
- 26: Mittenebene des distalen Statorpolschuhs
- 28: Mittenebene des proximalen Statorpolschuhs
- 30: Läufer
- 32: distaler Läuferpolschuh
- 34: proximaler Läuferpolschuh
- 36: Spalt
- 38: Symmetrieebene des Läufers
- 40: Mittenebene des distalen Läuferpolschuhs
- 42: Mittenebene des proximalen Läuferpolschuhs
- 44: distaler Anschlag
- 46: proximaler Anschlag
- 50: Haltekraft (erfindungsgemäß)
- 52: Kraft bei positivem Impuls (erfindungsgemäß)
- 54: Kraft bei negativem Impuls (erfindungsgemäß)
- 60: Haltekraft (herkömmlicher Aktuator)
- 62: Kraft bei positivem Impuls (herkömmlicher Aktuator)
- 64: Kraft bei negativem Impuls (herkömmlicher Aktuator)

## Patentansprüche

1. Bistabiler elektromagnetischer Aktuator (1), insbesondere für ein chirurgisches Instrument, umfassend einen außerhalb eines Rohres (2) angeordneten Stator (10) und einen im Rohr (2) längsaxial verschiebbar gelagerten Läufer (30), der wenigstens teilweise ein paramagnetisches und/oder ferromagnetisches Material aufweist und durch Beaufschlagung mit einem elektromagnetischen Feld reversibel zwischen einer ersten Position (6) und einer zweiten Position (8) verschiebbar ist, wobei der Läufer (30) in der ersten und/oder zweiten Position (6, 8) an einem Anschlag (44, 46) anliegt, wobei der Stator (10) zwei gegensinnig axial gepolte Ringpermanentmagneten (12, 14), eine Spule (16) zur Erzeugung des elektromagnetischen Felds und ein Rückschlusselement (18) mit zwei Statorpolschuhen (20, 22) aufweist und der Läufer (30) weder in der ersten Position (6) noch in der zweiten Position (8) in axialer Richtung über die Ringpermanentmagneten (12, 14) hinausragt, wobei das Rückschlusselement (18) mit den Statorpolschuhen (20, 22) die Spule (16) umschließt und die Statorpolschuhe (20, 22) auf beiden Seiten der Spule (16) zwischen der Spule (16) und den Ringpermanentmagneten (12, 14) angeordnet sind, wobei der Läufer (30) zwei Läuferpolschuhe (32, 34) aufweist, **dadurch gekennzeichnet, dass** eine axiale Breite der Statorpolschuhe (20, 22) kleiner ist als eine axiale Breite der Läuferpolschuhe (32, 34).

2. Bistabiler elektromagnetischer Aktuator (1) nach Anspruch 1, **dadurch gekennzeichnet, dass** die axiale Breite der Statorpolschuhe (20, 22) kleiner ist als ein axialer Hub des Aktuators (1) zwischen der ersten Position (6) und der zweiten Position (8).

3. Bistabiler elektromagnetischer Aktuator (1) nach Anspruch 1 oder 2, **dadurch gekennzeichnet, dass** der Läufer (30) mit den Läuferpolschuhen (32, 34) eine Gesamtlänge in axialer Richtung aufweist, die größer ist als der äußere Abstand der Statorpolschuhe (20, 22) in axialer Richtung.

4. Bistabiler elektromagnetischer Aktuator (1) nach einem der Ansprüche 1 bis 3, **dadurch gekennzeichnet, dass** ein Abstand der axialen Mittenebenen (40, 42) der Läuferpolschuhe (32, 34) größer ist als ein Abstand der axialen Mittenebenen (26, 28) der Statorpolschuhe (20, 22).

5. Bistabiler elektromagnetischer Aktuator (1) nach einem der Ansprüche 1 bis 4, **dadurch gekennzeichnet, dass** die Statorpolschuhe (20, 22) untereinander eine gleiche axiale Breite aufweisen.

6. Bistabiler elektromagnetischer Aktuator (1) nach einem der Ansprüche 1 bis 5, **dadurch gekennzeichnet, dass** die Läuferpolschuhe (32, 34) untereinander eine gleiche axiale Breite aufweisen.

7. Bistabiler elektromagnetischer Aktuator (1) nach einem der Ansprüche 1 bis 6, **dadurch gekennzeichnet, dass** der Stator (10) und/oder der Läufer (30) jeweils symmetrisch um eine Symmetrieebene (24, 38) ausgebildet ist oder sind.

8. Bistabiler elektromagnetischer Aktuator (1) nach einem der Ansprüche 1 bis 7, **dadurch gekennzeichnet, dass** in einer Endposition, insbesondere der ersten oder zweiten Position (6, 8), der an der Endposition angeordnete Läuferpolschuh (32, 34) den ihm gegenüberliegenden Statorpolschuh (20, 22) in axialer Richtung wenigstens teilweise überdeckt, wobei eine Mittenebene (40, 42) des an der Endposition angeordneten Läuferpolschuhs (32, 34) in axialer Richtung zur Endposition hin über eine Mittenebene (26, 28) des ihm gegenüberliegenden Statorpolschuhs (20, 22) hinaus angeordnet ist.

9. Bistabiler elektromagnetischer Aktuator (1) nach einem der Ansprüche 1 bis 8, **dadurch gekennzeichnet, dass** in einer Endposition der nicht an der Endposition angeordnete Läuferpolschuh (32, 34) den ihm gegenüberliegenden Statorpolschuh (20, 22) in axialer Richtung vollständig überdeckt, wobei eine Mittenebene (40, 42) des nicht an der Endposition angeordneten Läuferpolschuhs (32, 34) in axialer Richtung zur Endposition hin über eine Mittenebene (26, 28) des ihm gegenüberliegenden Statorpolschuhs (20, 22) hinaus angeordnet ist.

10. Chirurgisches Instrument, insbesondere Endoskop, mit einem bistabilen elektromagnetischen Aktuator (1) nach einem der Ansprüche 1 bis 9.

## Claims

1. A bistable electromagnetic actuator (1), in particular for a surgical instrument, comprising a stator (10) arranged outside a tube (2), and a rotor (30) that is mounted in the tube (2) so as to be displaceable axially in the longitudinal direction, which is of a paramagnetic and/or ferromagnetic material, at least in part, and which can be reversibly moved between a first position (6) and a second position (8) by applying an electromagnetic field, wherein the rotor (30) lies against a stop (44, 46) in the first and/or second position (6, 8), wherein the stator (10) has two ring permanent magnets (12, 14) that are axially polarized in opposite directions, a coil (16) for generating the electromagnetic field, and a magnetic return element (18) having two stator pole shoes (20, 22), and the rotor (30) does not project in an axial direction beyond the ring permanent magnets (12, 14) either in the first position (6) or in the second position (8), wherein the magnetic return element (18) with the stator pole shoes (20, 22) encloses the coil (16), and the stator pole shoes (20, 22) are arranged on both sides of the coil (16) between the coil (16) and the ring permanent magnets (12, 14), wherein the rotor (30) has two rotor pole shoes (32, 34), **characterized in that** an axial width of the stator pole shoes (20, 22) is smaller than an axial width of the rotor pole shoes (32, 34).

2. The bistable electromagnetic actuator (1) according to claim 1, **characterized in that** the axial width of the stator pole shoes (20, 22) is smaller than an axial stroke of the actuator (1) between the first position (6) and the second position (8).

3. The bistable electromagnetic actuator (1) according to claim 1 or 2, **characterized in that** the rotor (30) with the rotor pole shoes (32, 34) has an overall length in the axial direction that is greater than the outer spacing of the stator pole shoes (20, 22) in the axial direction.

4. The bistable electromagnetic actuator (1) according to one of claims 1 to 3, **characterized in that** a spacing between the axial midplanes (40, 42) of the rotor pole shoes (32, 34) is greater than a spacing between the axial midplanes (26, 28) of the stator pole shoes (20, 22).

5. The bistable electromagnetic actuator (1) according to one of claims 1 to 4, **characterized in that** the stator pole shoes (20, 22) have an equal axial width among each other.

6. The bistable electromagnetic actuator (1) according to one of claims 1 to 5, **characterized in that** the rotor pole shoes (32, 34) have an equal axial width among each other.

7. The bistable electromagnetic actuator (1) according to one of claims 1 to 6, **characterized in that** the stator (10) and/or the rotor (30) are each designed symmetrically across a plane of symmetry (24, 38).

8. The bistable electromagnetic actuator (1) according to one of claims 1 to 7, **characterized in that** in an end position, in particular the first or second position (6, 8), the rotor pole shoe (32, 34) arranged at the end position at least partially covers the opposing stator pole shoe (20, 22) in the axial direction, wherein a midplane (40, 42) of the rotor pole shoe (32, 34) arranged at the end position is arranged extending in the axial direction relative to the end position beyond a midplane (26, 28) of the stator pole shoe (20, 22) opposite the rotor pole shoe.

9. The bistable electromagnetic actuator (1) according to one of claims 1 to 8, **characterized in that** in an end position, the rotor pole shoe (32, 34) that is not arranged at the end position completely covers the opposing stator pole shoe (20, 22) in the axial direction, wherein a midplane (40, 42) of the rotor pole shoe (32, 34) that is not arranged at the end position is arranged extending in the axial direction relative to the end position beyond a midplane (26, 28) of the stator pole shoe (20, 22) opposite the rotor pole shoe.

10. A surgical instrument, in particular an endoscope, having a bistable electromagnetic actuator (1) according to one of claims 1 to 9.

## Revendications

1. Actionneur électromagnétique bistable (1), en particulier pour un instrument chirurgical, comprenant un stator (10) disposé à l'extérieur d'un tube (2) et un rotor (30) monté dans le tube (2) de manière à pouvoir être déplacé longitudinalement de façon axiale, qui présente au moins partiellement un matériau paramagnétique et/ou ferromagnétique et qui peut être déplacé de manière réversible entre une première position (6) et une deuxième position (8) par l'action d'un champ électromagnétique, le rotor (30) étant en appui contre une butée (44, 46) entre la première et/ou la deuxième position (6, 8), le stator (10) présentant deux aimants permanents annulaires (12, 14) qui sont polarisés axialement en directions opposées, comportant une bobine (16) pour générer le champ électromagnétique et un élément de rappel (18) avec deux pièces polaires de stator (20, 22), le rotor (30) ne dépassant ni dans la première position (6) ni dans la deuxième position (8) dans la direction axiale au-delà des aimants permanents annulaires (12, 14), l'élément de rappel (18) et les pièces polaires de stator (20, 22) entourant la bobine (16), et les pièces polaires de stator (20, 22) étant disposés sur deux côtés de la bobine (16), entre la bobine (16) et les aimants permanents annulaires (12, 14), le rotor (30) comportant deux pièces polaires de rotor (32, 34), **caractérisé en ce que** la largeur axiale des pièces polaires de stator (20, 22) est inférieure à une largeur axiale des pièces polaires de rotor (32, 34).

2. Actionneur électromagnétique bistable (1) selon la revendication 1, **caractérisé en ce que** la largeur axiale des pièces polaires du stator (20, 22) est inférieure à une course axiale de l'actionneur (1) entre la première position (6) et la deuxième position (8).

3. Actionneur électromagnétique bistable (1) selon la revendication 1 ou la revendication 2, **caractérisé en ce que** le rotor (30) avec les pièces polaires du rotor (32, 34) a une longueur totale dans la direction axiale qui est supérieure à la distance extérieure des pièces polaires du stator (20, 22) dans la direction axiale.

4. Actionneur électromagnétique bistable (1) selon l'une des revendications 1 à 3, **caractérisé en ce qu'**une distance entre les plans médians axiaux (40, 42) des pièces polaires du rotor (32, 34) est supérieure à une distance entre les plans médians axiaux (26, 28) des pièces de stator (20, 22).

5. Actionneur électromagnétique bistable (1) selon l'une quelconque des revendications 1 à 4, **caractérisé en ce que** les pièces polaires du stator (20, 22) ont la même largeur axiale les unes par rapport aux autres.

6. Actionneur électromagnétique bistable (1) selon l'une des revendications 1 à 5, **caractérisé en ce que** les pièces polaires du rotor (32, 34) ont la même largeur axiale les unes par rapport aux autres.

7. Actionneur électromagnétique bistable (1) selon l'une des revendications 1 à 6, **caractérisé en ce que** le stator (10) et/ou le rotor (30) sont chacun conçus symétriquement autour d'un plan de symétrie (24, 38).

8. Actionneur électromagnétique bistable (1) selon l'une des revendications 1 à 7, **caractérisé en ce que** dans une position finale, en particulier la première ou la deuxième position (6, 8), la pièce polaire du rotor (32, 34) disposée dans la position finale recouvre au moins partiellement la pièce polaire du stator (20, 22) à l'opposé d'elle située dans la direction axiale, un plan médian (40, 42) de la pièce polaire du rotor (32, 34) disposée dans la position finale s'étend dans la direction axiale vers la position finale au-delà d'un plan médian (26, 28) de la pièce polaire du stator (20, 22) située à l'opposé de la pièce polaire du rotor.

9. Actionneur électromagnétique bistable (1) selon l'une des revendications 1 à 8, **caractérisé en ce que**, dans une position finale, la pièce polaire du rotor (32, 34), qui n'est pas disposée dans la position finale, recouvre complètement la pièce polaire du stator (20, 22) située à l'opposé à la pièce polaire du rotor dans la direction axiale, un plan médian (40, 42) de la pièce polaire de rotor (32, 34) qui n'est pas disposée dans la position finale, étant disposé dans la direction axiale vers la position finale au-delà d'un plan médian (26, 28) de la pièce polaire de stator (20, 22), qui est situé à l'opposé de la pièce polaire de rotor.

10. Instrument chirurgical, en particulier endoscope, avec un actionneur électromagnétique bistable (1) selon l'une des revendications 1 à 9.
